# EUROPÄISCHE PATENTANMELDUNG

(11) **EP 2 230 648 A1**
(43) Veröffentlichungstag der Anmeldung: **22.09.2010**
(21) Anmeldenummer: 10002659.0
(22) Anmeldetag: 12.03.2010
(51) Int. Cl.: G07F 7/10, G06Q 20/00, G06F 21/00

(54) **Einmalkennwortmaske zum Ableiten eines Einmalkennworts**

(30) Priorität: 17.03.2009 DE 102009013551
(71) Anmelder: Giesecke&Devrient, 81677 München (DE)
(72) Erfinder: Kalman, Cinkler, Dr., 80797 München (DE); Finkenzeller, Klaus, 85774 Unterföhring (DE); Belau, Markus, 81827 München (DE)

(57) **Zusammenfassung**

Auf einem portablen Datenträger (10) wird eine Einmalkennwortmaske (15) erzeugt, anhand welcher ein Benutzer (16) des Datenträgers (10) ein mit einem auf einer Transaktionseinrichtung (20) vorliegenden Referenzeinmalkennwort (28) übereinstimmendes Einmalkennwort (18) ableiten kann, um sich gegenüber der Transaktionseinrichtung (20) zu authentisieren oder Transaktionsdaten (19) gegenüber der Transaktionseinrichtung (20) zu autorisieren. Dabei werden in die Einmalkennwortmaske (15) Variablenzeichen eingebracht, die beim Ableiten des Einmalkennworts (18) jeweils mit einem Anteil eines dem Benutzer (16) zugeordneten Geheimnisses (17) in einer eindeutig vorgegebenen Weise ersetzt werden, wobei die Variablenzeichen derart in die Einmalkennwortmaske (15) eingebracht werden, dass das Geheimnis (17) lediglich teilweise in dem abgeleiteten Einmalkennwort (18) enthalten sind.

## Beschreibung

Die vorliegende Erfindung betrifft ein Verfahren auf einem portablen Datenträger zum Erzeugen einer Einmalkennwortmaske, Verfahren zum Authentisieren eines Benutzers bzw. zum Autorisieren von Transaktionsdaten gegenüber einer Transaktionseinrichtung mittels eines aus einer Einmalkennwortmaske abgeleiteten Einmalkennworts sowie einen derartigen portablen Datenträger sowie ein einen solchen Datenträger und eine Transaktionseinrichtung umfassendes Transaktionssystem.

Zur Autorisierung von Transaktionsdaten gegenüber einer Transaktionseinrichtung, z.B. im Online-Banking oder dergleichen, ist es bekannt, Transaktionsnummern (TAN) in Form von Einmalkennwörtern ("One Time Passwords"; OTP) einzusetzen, die ein Benutzer mittels eines separaten portablen oder kartenförmigen Datenträgers, eines so genannten OTP-Generators, erzeugt, aus einer TAN-Liste (z.B. als indizierte TAN bzw. iTAN) ausliest oder über ein Datenkommunikationsnetzwerk (z.B. als mobile TAN bzw. mTAN) empfängt, und die nach Benutzung ihre Gültigkeit verlieren. Ein erzeugtes, als TAN verwendetes Einmalkennwort wird von dem Benutzer zusammen mit den Transaktionsdaten in die Transaktionseinrichtung eingegeben und dort zur Feststellung einer Autorisierung mit einem Referenzeinmalkennwort verglichen.

Ebenso werden Einmalkennwörter zur Authentisierung des Benutzers eingesetzt, also zum Nachweis einer Benutzeridentität gegenüber einer Transaktionseinrichtung. Daneben werden z.B. zur Benutzerauthentisierung aber auch statische Geheimnisse eingesetzt, wie z.B. eine persönliche Identifikationskennung (PIN) des Benutzers. In Kombination mit der Autorisierung von Transaktionsdaten durch eine Transaktionsnummer spricht man dann von einer "Dual-Factor"-Authentisierung, da der Benutzer zur Durchführung einer Transaktion zwei Geheimnisse präsentieren muss, nämlich eine PIN zur eigenen Authentisierung und eine TAN zur Transaktionsautorisierung.

Während eine statische PIN gravierende Sicherheitsrisiken mit sich bringt, da sie von einem Angreifer leichter ausgespäht werden kann, zum Beispiel durch Protokollieren von Tastaturanschlägen des Benutzers mittels einer Schadsoftware, unterliegen auch die zunächst sichereren Einmalkennwörter, wie z.B. die iTAN, die anhand eines von der Transaktionseinrichtung vorgegebenen Index aus einer iTAN-Liste ausgewählt oder von einem OTP-Generator bereitgestellt wird, erheblichen Sicherheitseinschränkungen. Zum Beispiel kann zu Missbrauchszwecken eine iTAN-Liste oder ein OTP-Generator (eventuell lediglich temporär) entwendet oder Einmalkennwörter durch eine Schadsoftware abgehört werden, z.B. durch einen Trojaner oder dergleichen. Auf die gleiche Weise kann ein unberechtigter Angreifer auch Transaktionsdaten ausspähen und z.B. derart manipulieren, dass die betreffende Transaktion zu seinen Gunsten ausgeführt wird. Ein solcher "Man-in-the-Middle"-Angriff ist weder von dem Benutzer noch von der Transaktionseinrichtung zu erkennen, da lediglich die Transaktionsdaten manipuliert werden, weitere Daten wie z.B. die TAN jedoch unverändert bleiben.

Dieses Risiko kann jedoch durch eine transaktionsabhängige oder benutzerabhängige TAN vermindert werden, die z.B. von den betreffenden Transaktionsdaten oder der geheimen PIN des Benutzers abhängt. Ein derartiges Verfahren bietet zwar eine hohe Sicherheit gegenüber Angriffen, ist aber auch mit hohen Kosten und einem hohen technischen Aufwand verbunden, da jeder Benutzer mit einem personalisierten OTP-Generator ausgestattet werden muss, dem zudem zur Erzeugung einer transaktions- bzw. benutzerabhängigen TAN die Transaktionsdaten sowie gegebenenfalls die geheime PIN des Nutzers vorliegen beziehungsweise mitgeteilt werden müssen.

In diesem Zusammenhang schlägt z.B. die US 5,177,789 einen portablen Datenträger vor, der zufallsbedingte Kodierungstabellen erzeugt und anzeigt, über die der Benutzer ein statisches Geheimnis in ein kodiertes Einmalkennwort transformieren kann. Hierbei besteht wiederum das Problem, dass ein Angreifer die PIN aus einer hinreichend großen Zahl von ausgespähten kodierten Einmalkennwörtern mit statistischen Mitteln ableiten kann. Zudem erfordert der vorgeschlagene OTP-Generator eine unüblich große Anzeigeeinrichtung zur Darstellung der umfangreichen Kodierungstabellen. In ähnlicher Weise schlagen auch die DE 39 04 215 A1 und die WO 02/17556 A1 Verfahren vor, bei denen ein statisches Geheimnis des Benutzers mittels eines portablen Datenträgers in Form eines Einmalkennworts kodiert wird.

Es ist die Aufgebe der vorliegenden Erfindung, ein Verfahren zum Erzeugen von gegenüber dem Stand der Technik sichereren Einmalkennwörtern vorzuschlagen, die zudem mit Hilfe von technisch hinreichend einfachen OTP-Generatoren erzeugt werden können.

Diese Aufgabe wird durch Verfahren sowie einen portablen Datenträger und ein Transaktionssystem mit den Merkmalen der unabhängigen Ansprüche gelöst. Vorteilhafte Ausgestaltungen und Weiterbildungen der Erfindung werden in den abhängigen Ansprüchen angegeben.

Auf einem als OTP-Generator eingesetzten portablen Datenträger wird eine Einmalkennwortmaske erzeugt, anhand der ein Benutzer des Datenträgers ein Einmalkennwort ableiten kann, welches mit einem auf einer Transaktionseinrichtung vorliegenden Referenzeinmalkennwort übereinstimmt. Die erzeugte Einmalkennwortmaske besteht aus einer mehrstelligen, alphanumerischen Zeichenkette, die erfindungsgemäß zumindest ein Variablenzeichen umfasst, das der Benutzer beim Ableiten des Einmalkennworts aus der Einmalkennwortmaske durch einen Anteil eines dem Benutzer persönlich zugeordneten Geheimnisses in einer vorgegebenen Weise ersetzen muss. Vorzugsweise ist dieses Geheimnis bestimmungsgemäß lediglich dem Benutzer und der Transaktionseinrichtung bekannt und dient der Authentisierung des Benutzers gegenüber der Transaktionseinrichtung. Hierbei wird die Einmalkennwortmaske derart erzeugt und mit zumindest einem Variablenzeichen versehen, dass das daraus abgeleitete Einmalkennwort das Geheimnis des Benutzers lediglich teilweise umfasst, d.h. dass es Anteile des Geheimnisses gibt, die nicht durch Ersetzen von Variablenzeichen in das Einmalkennwort eingegangen sind.

Da das dem Benutzer persönlich zugeordnete Geheimnis erfindungsgemäß niemals vollständig in einem abgeleiteten Einmalkennwort enthalten ist, kann das Geheimnis auch faktisch nicht von einem Angreifer rekonstruiert werden. Zudem erfolgt die Ableitung des Einmalkennworts in der durch die Variablenzeichen eindeutig vorgegebenen Weise aus der Einmalkennwortmaske lediglich gedanklich durch den Benutzer, so dass der Benutzer sein Geheimnis anders als bei dem übliche PIN-Verfahren in keiner Weise vollständig und im Klartext offenbaren muss. Ebenso wenig geht das Geheimnis vollständig oder gar im Klartext in das Einmalkennwort ein, sondern lediglich teilweise und permutiert. Ein Angreifer kann das Geheimnis demzufolge weder durch Ausspähen etwaiger Tastaturanschläge oder anderweitiger Aufzeichnungen des Benutzers noch aus der Einmalkennwortmaske selbst rekonstruieren. Zudem ist der Datenträger als solches für einen Angreifer nutzlos, da er für eine missbräuchliche Verwendung zusätzlich noch das niemals vollständig oder gar im Klartext vorliegende Geheimnis des Benutzers kennen müsste. Die erfindungsgemäß erzeugte Einmalkennwortmaske bzw. das aus dieser eindeutig abzuleitende Einmalkennwort ist demzufolge einerseits sicherer als herkömmliche Einmalkennwörter und andererseits wird das Geheimnis des Benutzers ausreichend vor Ausspähen geschützt.

Die abgeleiteten Einmalkennwörter eignen sich sowohl zur Authentisierung des Benutzers gegenüber einer Transaktionseinrichtung als auch zur Autorisierung von Transaktionsdaten, die der Benutzer gegenüber der Transaktionseinrichtung zur Definition einer gewünschten Transaktion spezifiziert. Sie sind für den Benutzer gemäß den Vorgaben der Variablenzeichen aus der Einmalkennwortmaske leicht im Kopf abzuleiten. Der Benutzer braucht hierbei keinerlei Überlegungen anstellen oder gedanklich kreativ werden, sondern muss die eindeutigen und deterministischen Vorgaben der Variablenzeichen lediglich schematisch bzw. mechanisch umsetzen.

Entsprechend umfasst ein erfindungsgemäßer portabler Datenträger, der beispielsweise in Form einer Display-Chipkarte vorliegen kann, neben den üblichen und bekannten Komponenten eines solchen Datenträgers, wie z.B. Datenkommunikationsschnittstellen, einem Prozessor, einer geeigneten Speicheranordnung sowie einem Betriebssystem, einen von dem Prozessor ausführbaren Maskengenerator in Form eines Applikationsprogramms oder dergleichen, der beispielsweise auf Veranlassung des Benutzers eine erfindungsgemäße Einmalkennwortmaske nach dem oben geschilderten Verfahren erzeugen und auf einer eigenen Anzeigeeinrichtung visuell bereitstellen kann. Darüber hinaus kann ein solcher Datenträger auch noch ein Aktivierungselement umfassen, über das der Benutzer die Erzeugung einer Einmalkennwortmaske bedarfsweise veranlassen kann. Prinzipiell benötigt ein derart ausgestatteter Datenträger keine weitere Datenkommunikation zur Umsetzung des erfindungsgemäßen Verfahrens und demzufolge auch keine kontaktbehaftete oder kontaktlose Datenkommunikationsschnittstelle. Dennoch kann es zweckmäßig sein, eine Datenkommunikationsschnittstelle vorzusehen, über die eine Datenkommunikationsverbindung zu der Transaktionseinrichtung bzw. zu einem Nutzerendgerät, z.B. einen Computer des Nutzers zur Datenkommunikation mit einem Transaktionsserver, hergestellt werden kann.

Vorzugsweise ist das dem Benutzer persönlich zugeordnete Geheimnis eine mehrstellige alphanumerische Zeichenkette in Form einer geheimen Identifikationskennung (PIN), die dem Benutzer von der Transaktionseinrichtung bereitgestellt wurde und dieser bei einer Anmeldung des Benutzers gegenüber der Transaktionseinrichtung ermöglicht, die Identität des Benutzers zu prüfen bzw. ihn zu authentifizieren. Entsprechend ist (bzw. sollte) die statische Identifikationskennung lediglich dem Benutzer und der Transaktionseinrichtung bekannt (sein). Durch teilweises Einbringen der Identifikationskennung in ein als Transaktionsnummer zu verwendendes Einmalkennwort wird eine "Dual-Factor"-Authentifizierung ermöglicht (also Authentisierung des Benutzers mit statischer PIN und Autorisierung von Transaktionsdaten mit variabler TAN), die beide Geheimnisse (nämlich PIN und TAN) in einem dynamischen Einmalkennwort vereint, das die statische PIN ausreichend vor Ausspähung schützt.

Die in die Einmalkennwortmaske einzufügenden Variablenzeichen bestimmen in einer für den Benutzer ohne Weiteres erkennbaren und eindeutigen Weise vorzugsweise jeweils ein Zeichen des mehrstelligen, alphanumerischen Geheimnisses, durch welches das betreffende Variablenzeichen beim Ableiten des Einmalkennworts zu ersetzen ist. Bei der Ableitung des Einmalkennworts ersetzt der Benutzer also jedes Variablenzeichen durch das von diesem jeweils vorgegebene alphanumerische Zeichen des Geheimnisses, so dass die Einmalkennwortmaske und das daraus abgeleitete Einmalkennwort vorzugsweise die gleiche Anzahl von Stellen aufweisen. Da das Geheimnis erfindungsgemäß lediglich teilweise in dem abgeleiteten Einmalkennwort vorhanden ist, wird die Einmalkennwortmaske mit einer Anzahl von Variablenzeichen ausgestattet, die geringer ist als die Anzahl der alphanumerischen Zeichen des Geheimnisses. Vorzugsweise wird das Verhältnis zwischen in das Einmalkennwort aufzunehmenden Zeichen des Geheimnisses und der Gesamtzahl der Zeichen (der Stellenzahl des Geheimnisses) nach statistischen Kriterien derart festgelegt, dass das Rekonstruieren des Geheimnisses aus einer Vielzahl von ausgespähten Einmalkennwörtern für einen Angreifer möglichst aufwendig ist, das heißt eine möglichst große Anzahl von ausgespähten Einmalkennwörtern zur Rekonstruktion des Geheimnisses benötigt wird.

Besonders bevorzugt werden neben den Variablenzeichen auch Festzeichen in die Einmalkennwortmaske eingebracht, die beim Ableiten des Einmalkennworts von dem Benutzer unverändert in dieses übernommen werden können. Die Festzeichen bewirken eine Verschleierung bzw. Maskierung derjenigen alphanumerischen Zeichen des Geheimnisses, mit denen die Variablenzeichen beim Ableiten des Einmalkennworts ersetzt wurden. Für einen Angreifer wird die Ermittlung des Geheimnisses aus einer hinreichend großen Anzahl von ausgespähten Einmalkennwörtern weiter erschwert, da er zunächst nicht zwischen von dem Datenträger vorzugsweise gemäß statistischen Kriterien vorgegebenen Festzeichen und den in dem Einmalkennwort vorhandenen Zeichen des Geheimnisses unterscheiden kann.

Dies ist insbesondere dann der Fall, wenn die von dem Datenträger vorgegebenen Festzeichen aus dem gleichen Alphabet beziehungsweise der gleichen alphanumerischen Grundmenge ausgewählt werden, aus deren Zeichen auch das Geheimnis besteht. Bei einem aus mehreren Ziffern bestehenden mehrstelligen Geheimnis, zum Beispiel einer vier- bis sechsstelligen PIN, werden die Festzeichen der Einmalkennwortmaske demzufolge auch aus einem Alphabet ausgewählt, das die zehn Ziffern umfasst, so dass ein Angreifer angesichts eines Einmalkennworts nicht zwischen Festzeichenziffern und Geheimnisziffern unterscheiden kann.

Um die Weise eindeutig vorzugeben, in der ein Benutzer in der Einmalkennwortmaske ein Variablenzeichen durch ein Zeichen des Geheimnisses ersetzen muss, wird ein Variablenzeichenalphabet bzw. eine alphanumerische Grundmenge verwendet, die sich von dem Festzeichenalphabet vollständig unterscheidet, d.h. disjunkt ist. Die Variablenzeichen sind somit in einer Einmalkennwortmaske für den Benutzer leicht erkennbar.

Vorzugsweise ist jeder Stelle des mehrstelligen Geheimnisses zumindest ein vorgegebenes Variablenzeichen zugeordnet, so dass der Benutzer angesichts eines Variablenzeichens der Einmalkennwortmaske ohne Weiteres erkennen kann, durch welches Zeichen des Geheimnisses dieses beim Ableiten des Einmalkennworts zu ersetzen ist. Falls das Variablenzeichenalphabet bei einem fünfstelligen Geheimnis beispielsweise aus fünf Buchstaben besteht, ist jeder dieser fünf Buchstaben genau einer Stelle des Geheimnisses eindeutig zugeordnet. Beispielsweise können die Buchstaben A bis E jeweils dasjenige Zeichen des Geheimnisses bestimmen, das an der ersten bis fünften Stelle in dem Geheimnis steht. Bei dem Variablenzeichenalphabet {E, B, P, Z, S} und der PIN 63935 müsste der Benutzer also in der Einmalkennwortmaske das Zeichen E durch 6, die Zeichen B und Z durch 3, das Zeichen P durch 9 und das Zeichen S durch 5 ersetzen.

Zur weiteren Erschwerung eines Ausspähens des Geheimnisses durch einen Angreifer kann in der Einmalkennwortmaske von Fall zu Fall sowohl die Anzahl der Variablenzeichen variiert werden, als auch die Stelle, an der Variablenzeichen innerhalb der Einmalkennwortmaske angeordnet werden. Insbesondere können die Anzahl der Variablenzeichen und deren Stelle innerhalb der Einmalkennwortmaske von externen Faktoren abhängen, beispielsweise einem von dem Datenträger feststellbaren Benutzerverhalten. Ebenso können diese Parameter für jede zu erzeugende Einmalkennwortmaske (pseudo-) zufällig von dem Datenträger bestimmt werden.

Für den Fall, dass der Benutzer mit einem erfindungsgemäß erzeugten und abgeleiteten Einmalkennwort Transaktionsdaten gegenüber der Transaktionseinrichtung autorisieren möchte, kann auch eine Einmalkennwortmaske von dem Datenträger erzeugt werden, die durch Variablenzeichen nicht nur Anteile des Geheimnisses des Benutzers sondern auch Anteile der zu autorisierenden Transaktionsdaten eindeutig bestimmt. Dazu umfasst eine solche Einmalkennwortmaske zumindest ein weiteres Variablenzeichen, das ein alphanumerisches Zeichen der Transaktionsdaten eindeutig bestimmt, so dass dieses Variablenzeichen von dem Benutzer beim Ableiten des Einmalkennworts durch das betreffende Zeichen der Transaktionsdaten ersetzt werden muss, beispielsweise ein Zeichen einer Kontonummer, einer Bankleitzahl, eines Transaktionsbetrages oder dergleichen. Ein auf diese Weise von dem Benutzer abgeleitetes Einmalkennwort ist nicht nur abhängig von dessen statischem Geheimnis, sondern auch von den konkreten, zu autorisierenden Transaktionsdaten, so dass durch die Transaktionseinrichtung eine Überprüfung der Integrität der Transaktionsdaten möglich ist, da gegebenenfalls von einem Angreifer manipulierte Transaktionsdaten nicht mehr zu dem betreffenden Einmalkennwort passen und erkannt werden können.

Das von dem Datenträger eingesetzte Verfahren zum Erzeugen der Einmalkennwortmaske wird von der Transaktionseinrichtung zur Erzeugung eines Referenzeinmalkennworts analog angewandt. Dazu erzeugt die Transaktionseinrichtung ein Referenzeinmalkennwort mit den gleichen Festzeichen und denjenigen Zeichen des Geheimnisses und gegebenenfalls der Transaktionsdaten, wie sie durch die Variablenzeichen der entsprechenden Einmalkennwortmaske des Datenträgers eindeutig bestimmt sind. Sofern das vom Benutzer in die Transaktionseinrichtung eingegebene Einmalkennwort mit dem von dieser analog erzeugten Referenzeinmalkennwort übereinstimmt, gilt der Benutzer einerseits als authentisiert und andererseits, sofern das Einmalkennwort zur Autorisierung von Transaktionsdaten dient, gelten die Transaktionsdaten als bestätigt beziehungsweise freigegeben, so dass die entsprechende Transaktion von der Transaktionseinrichtung umgesetzt werden kann.

Ein entsprechendes Transaktionssystem, mittels dessen der Benutzer eine von ihm gewünschte Transaktion ausführen kann, beispielsweise eine Online-Banking-Transaktion gegenüber einem Bank-Server, eine E-Commerce-Transaktion gegenüber einem Anbieter-Server oder dergleichen, umfasst neben dem erfindungsgemäßen Datenträger eine Transaktionseinrichtung, die beispielsweise ein dem Benutzer zugängliches Nutzerendgerät, zum Beispiel einen Personalcomputer, ein Notebook, ein Telekommunikationsendgerät oder dergleichen, zum Eingeben der entsprechenden Transaktionsdaten durch den Benutzer sowie ein Datenkommunikationsnetzwerk und einen darüber mit dem Nutzerendgerät verbundenen Transaktionsserver umfasst. Die Transaktionseinrichtung umfasst einen Referenzkennwortgenerator, der ein Referenzeinmalkennwort analog zu dem von dem Benutzer aus der aktuellen Einmalkennwortmaske abzuleitenden Einmalkennwort erzeugen kann. Die Referenzkennworterzeugungseinrichtung kann hierbei an einer nahezu beliebigen Stelle in der Transaktionseinrichtung vorliegen, beispielsweise auf dem Transaktions-Server selbst, auf einer nachgeordneten oder zentralen Einrichtung oder auch auf einem sicheren Datenträger, der an das Benutzerendgerät angeschlossen werden kann und eine sichere Datenkommunikationsverbindung zu dem Transaktionsserver herstellt.

Gegenüber einem vergleichbaren Transaktionssystem, bei dem herkömmliche, benutzerunabhängige Einmalkennwörter erzeugt und verwendet werden, ist das erfindungsgemäße Transaktionssystem weitgehend identisch. Zur Umsetzung des erfindungsgemäßen Verfahrens muss lediglich ein herkömmlicher Kennwortgenerator des Datenträgers durch den erfindungsgemäßen Maskengenerator ersetzt werden und ein ohnehin bereits vorhandener Referenzkennwortgenerator der Transaktionseinrichtung muss aktualisiert werden. Da es sich bei diesen Komponenten vorzugsweise um Softwareapplikationen handelt, können alle Hardware-Komponenten unverändert bleiben und es kann auf eine bestehende Infrastruktur zurückgegriffen werden.

Das Einmalkennwort ist vorzugsweise einem Benutzer zugeordnet. Der Benutzer verwendet sein Benuter-Einmalkennwort zur Authentisierung bzw. zur Freigabe einer Transaktion gegenüber einer anderen Instanz des Systems. In alternativen oder ergänzenden Ausgestaltungen kann das Einmalkennwort aber auch einer Systeminstanz, wie beispielsweise dem Transaktionsserver oder der Bank, zugeordnet sein. Die Systeminstanz verwendet das System-Einmalkennwort zur Authentisierung bzw. als Bestätigung für eine Transaktion gegenüber dem Benutzer. In diesem Fall leitet die Systeminstanz das Einmalkennwort ab, wie zuvor beschrieben also insbesondere mit Hilfe einer geheimen Information und/oder von Transaktionsdaten, und das abgeleitete System-Einmalkennwort wird dem Benutzer - beispielsweise von seiner Transaktionseinrichtung - angezeigt. Der Benutzer prüft das von der Systeminstanz abgeleitete Einmalkennwort, indem er es mit Hilfe der Einmalkennwortmaske selbst ableitet und dann vergleicht. Im Sinne der vorliegend verwendeten Begriffe wird das Referenzeinmalkennwort als das System-Einmalkennwort verwendet.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Fig.1: ein Transaktionssystem umfassend einen erfindungsgemäßen Daten- träger und eine Transaktionseinrichtung;
- Fig. 2: eine schematische Illustration eines Verfahrens zur Authentisierung eines Benutzers des Datenträgers gegenüber einer Transaktionsein- richtung; sowie
- Fig. 3: eine schematische Illustration eines Verfahrens zur Autorisierung von Transaktionsdaten gegenüber der Transaktionseinrichtung.

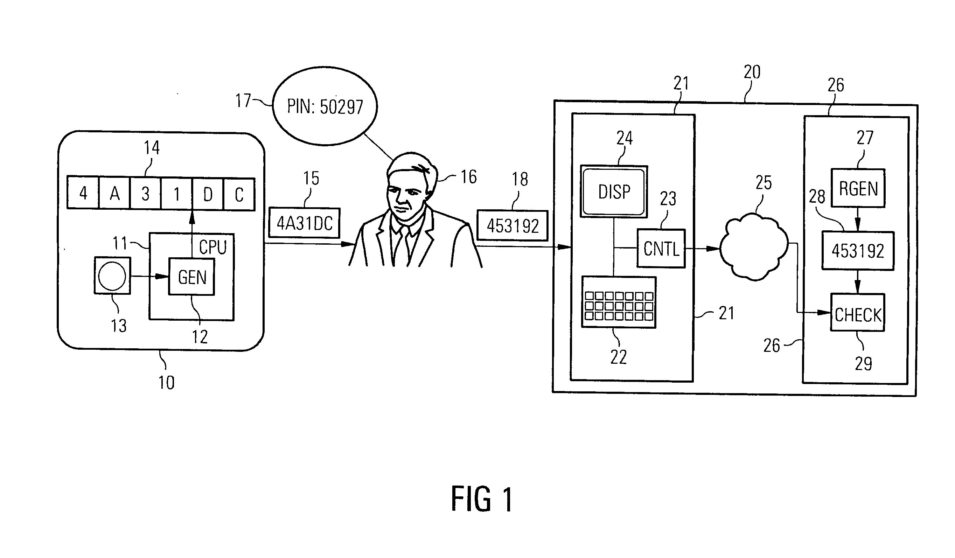

Fig. 1 zeigt eine Anordnung, umfassend einen portablen Datenträger 10, der auf Veranlassung eines Benutzers 16 eine Einmalkennwortmaske 15 erzeugen kann, sowie eine Transaktionseinrichtung 20, der der Benutzer 16 ein aus der erzeugten Einmalkennwortmaske 15 abgeleitetes Einmalkennwort 18 z.B. zur Authentisierung oder zur Autorisierung von ebenfalls eingegebenen Transaktionsdaten übergibt. Die Transaktionseinrichtung 20 wiederum umfasst ein Nutzerendgerät 21, z.B. einen Personal- oder tragbaren Computer, ein Telekommunikationsendgerät oder dergleichen, in das der Benutzer 16 das abgeleitete Einmalkennwort 18 über eine Tastatur 22 und eine Anzeigeeinrichtung 24 (DISP) eingeben kann. Das eingegebene Einmalkennwort 18 wird dann von der Steuereinrichtung 23 (CNTL) des Nutzerendgeräts 21 über ein geeignetes Datenkommunikationsnetzwerk 25, beispielsweise das Internet, ein Mobilfunknetz oder dergleichen, an einen Transaktionsserver 26 weitergeleitet, der das empfangene Einmalkennwort 18 mittels einer Prüfund Steuereinrichtung 29 (CHECK) auf Übereinstimmung mit einem Referenzeinmalkennwort 28 prüft und den Benutzer gegebenenfalls als korrekt authentisiert ansieht oder die gewünschte Transaktion durchführt.

Im Zusammenhang mit der Durchführung von Online-Transaktionen, beispielsweise einer Banküberweisung im Online-Banking, die der Benutzer in Form von Transaktionsdaten auf seinem Nutzerendgerät 21 gegenüber dem Transaktionsserver 26 anweist, kann das Einmalkennwort 18 beispielsweise als Transaktionsbestätigung bzw. Transaktionsnummer (TAN) verwendet werden, mit dem die von dem Benutzer 16 zuvor oder im Wesentlichen gleichzeitig an den Transaktionsserver 26 übertragenen Transaktionsdaten bestätigt werden. Ebenso ist es möglich, dass der Benutzer 16 das Einmalkennwort 18 zur Authentifizierung gegenüber dem Transaktionsserver 26 verwendet, beispielsweise im Rahmen eines Anmeldevorgangs gegenüber einem Internetportal eines Informations- oder Dienstleistungsanbieters, einem Intranet einer Firma oder dergleichen. Da der Benutzer Anteile einer geheimen, persönlichen Identifikationskennung (PIN) nach eindeutiger Vorgabe durch die Einmalkennwortmaske 15 in das Einmalkennwort 18 einbringt, ist das Einmalkennwort 18 benutzerabhängig, so dass bei Verwendung des Einmalkennworts 18 als TAN gleichzeitig eine Authentisierung des Benutzers bzw. eine Überprüfung seiner Identität durch den Transaktions-server 26 erfolgen kann.

Der als OTP-Generator ausgestaltete portable Datenträger 10 umfasst die üblichen Komponenten eines derartigen Datenträgers, insbesondere einen Prozessor 11 (CPU) und den benötigten flüchtigen, nichtflüchtigen und/ oder permanenten Speicher (nicht dargestellt), in dem ein Betriebssystem des Datenträgers und gegebenenfalls weitere Softwareapplikationen abgelegt sind. Ferner umfasst der Datenträger 10 einen als Softwareapplikation ausgestalteten Maskengenerator 12 (GEN), der infolge einer Aktivierung durch den Benutzer 16 über den Schalter 13 eine Einmalkennwortmaske 15 erzeugt und auf der Anzeigeeinrichtung 14 des Datenträgers 10, z.B. einem herkömmlichen 7-Segment-LCD-Display, darstellt.

In dem Beispiel der Fig.1 besteht die von dem Maskengenerator 12 erzeugte Einmalkennwortmaske 15 aus sechs alphanumerischen Zeichen, nämlich den drei Ziffern "4", "3" und "1" und den drei Buchstaben "A", "D" und "C". Die Ziffern repräsentieren Festzeichen, die der Benutzer 16 bei der Ableitung des Einmalkennworts 18 unverändert in dieses übernimmt, während die Buchstaben Variablenzeichen repräsentieren, die von dem Benutzer 16 jeweils durch eine bestimmte Ziffer seiner geheimen PIN 17 ersetzt werden müssen. Die als Variablenzeichen fungierenden Buchstaben geben hierbei in eindeutiger Weise vor, durch welche Ziffern der PIN 17 diese jeweils zu ersetzen sind, so dass der Benutzer 16 lediglich diese von jedem einzelnen Buchstaben in der Einmalkennwortmaske 15 vorgegebene Vorschrift befolgen muss. Das Ableiten des Einmalkennworts 18 aus der Einmalkennwortmaske 15 ist also durch die Variablenzeichen vollständig und eindeutig determiniert und erfordert keine weitere kreative, steuernde oder anderweitig nicht-deterministische, gedankliche Leistung des Benutzers 16, sondern kann rein mechanisch erfolgen, so wie es z.B. bei den Referenzkennwortgenerator 27 (RGEN) des Transaktionsservers 26 der Fall ist, der ein mit dem abzuleitenden Einmalkennwort 18 übereinstimmendes Referenzeinmalkennwort 28 erzeugt.

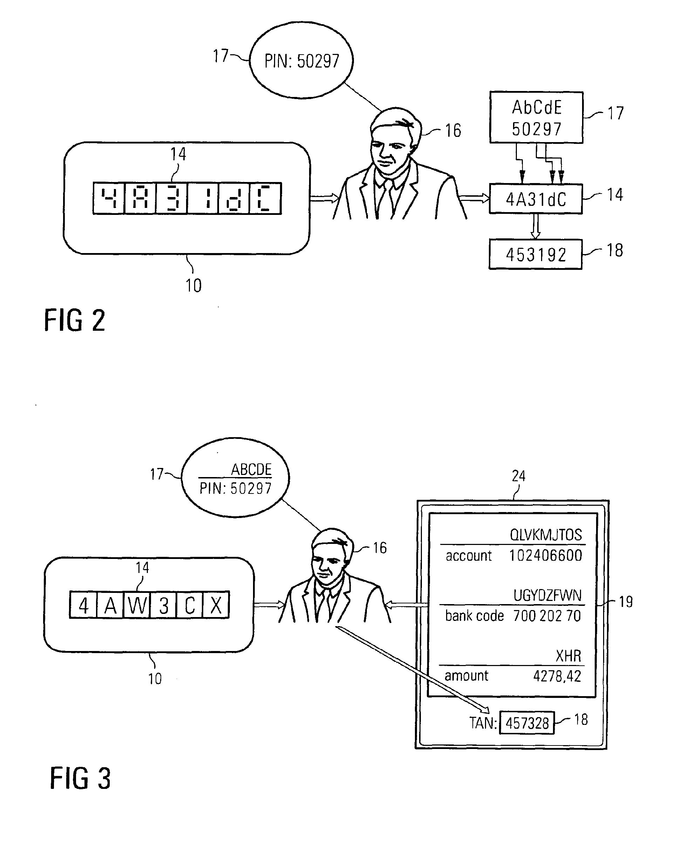

Die Figuren 2 und 3 zeigen zwei bevorzugte Ausführungsformen des Verfahrens zur Erzeugung einer Einmalkennwortmaske 15 und Verwendung des resultierenden Einmalkennworts 18 im Zusammenhang mit der Authentisierung des Benutzers 16 gegenüber der Transaktionseinrichtung 20 (Fig. 2) und mit der Autorisierung von Transaktionsdaten 19 gegenüber der Transaktionseinrichtung 20 (Fig. 3).

Anhand aller drei Figuren wird deutlich, dass der Maskengenerator 12 die Einmalkennwortmaske 15 derart erzeugt, dass die geheime PIN 17 lediglich teilweise und zudem in der Regel stellenweise permutiert in dem abgeleiteten Einmalkennwort 18 vorkommt. So sind bei der in den Figuren 1 und 2 gezeigten Einmalkennwortmaske 15 (4A31DC) die drei Variablenzeichen ("A", "D", "C") durch die jeweils entsprechenden Ziffern ("5", "7", "9") der geheimen PIN 17 zu ersetzen, so dass in dem resultierenden Einmalkennwort 18 (453192) lediglich drei der fünf Ziffern der geheimen PIN 17 auftauchen.

Weiterhin legt der Maskengenerator 12 für jede zu erzeugende Einmalkennwortmaske 15 die Anzahl der Variablenzeichen sowie deren Stellen innerhalb einer Einmalkennwortmaske 15 neu und individuell fest, z.B. mittels eines (Pseudo-) Zufallsgenerators. Dabei werden die Festzeichen der Einmalkennwortmaske 15 aus dem gleichen Alphabet ausgewählt (vorliegend dem Ziffernalphabet "0", "1", ..., "9"), aus dem auch die Zeichen der geheimen PIN 17 stammen. Dadurch wird einerseits eine möglichst große statistische Variabilität und andererseits eine möglichst gute Gleichverteilung der Zeichen der Einmalkennwörter 18 angestrebt, so dass die geheime PIN 17 des Benutzers 16 nur mit möglichst hohem Aufwand und bei Kenntnis von möglichst vielen verschiedenen Einmalkennwörtern 18 mit statistischen Mitteln reproduziert werden kann, da erstens niemals sämtliche Ziffern der geheimen PIN 17 in einem erzeugten Einmalkennwort 18 auftreten, zweitens die Ziffern der PIN 17 in variabler Anzahl und an variablen Stellen innerhalb des Einmalkennworts 18 auftreten und drittens diejenigen Ziffern des Einmalkennworts 18, die aus der PIN 17 stammen, nicht von denjenigen Ziffern zu unterscheiden sind, die der Maskengenerator 12 als Festzeichen in die Einmalkennwortmaske 15 eingebracht hat.

Damit der Benutzer 16 anhand einer auf dem Display 14 angezeigten Einmalkennwortmaske 15 ohne Weiteres und eindeutig erkennen kann, welche Zeichen der Einmalkennwortmaske 15 durch welche Zeichen seiner geheimen PIN 17 zu ersetzen sind, werden einerseits die Festzeichen (hier "4", "3" und "1") aus einem Festzeichenalphabet ausgewählt, das sich von dem Variablenzeichenalphabet unterscheidet, aus dem die Variablenzeichen (hier "A", "D" und "C") der Einmalkennwortmaske 15 ausgewählt werden. Andererseits werden die zur Verfügung stehenden Zeichen des Variablenzeichenalphabets jeweils eindeutig genau einer Stelle der geheimen PIN 17 zugeordnet, so dass das Variablenzeichenalphabet mindestens so viele Zeichen umfasst, wie die geheime PIN 17 Stellen hat. Im Beispiel der Figuren 1 und 2 ist das Variablenzeichen "A" der ersten Stelle der PIN 17 zugeordnet und ist entsprechend durch die Ziffer "5" zu ersetzen, das Variablenzeichen "B" ist der zweiten PIN-Stelle zugeordnet und durch die "0" zu ersetzen, bis schließlich das Variablenzeichen "E" der letzten PIN-Stelle zugeordnet ist und durch die "7" zu ersetzen ist. Aus dieser Zuordnung ergeben sich für den Benutzer 16 eindeutige und deterministisch ausführbare Ableitungsregeln, die ihm beispielsweise von dem Betreiber des Transaktionsservers 26 zusammen mit der PIN 17 mitgeteilt werden können.

Zu jeder Einmalkennwortmaske 15 existiert also genau ein Einmalkennwort 18, das dieser eindeutig zugeordnet ist. Allerdings kann es mehrere Einmalkennwortmasken 15 geben, die zu dem gleichen Einmalkennwort 18 abgeleitet werden. Diese injektive Abbildung von Einmalkennwortmasken 15 auf Einmalkennwörter 18 kann von dem Maskengenerator 12 so ausgestaltet werden, dass die Reproduktion der PIN 17 für einen Angreifer beliebige schwierig wird, z.B. durch Berücksichtigung der Stellenzahl der PIN 17, der Stellenzahl der Einmalkennwortmaske 15, der Anzahl und Stellen der Variablenzeichen und Festzeichen in einer Einmalkennwortmaske 15, der Festzeichen- und Variablenzeichenalphabete, oder dergleichen. Hierbei kann der Maskengenerator 12 insbesondere das Verhältnis der Anzahl der Variablenzeichen einer Einmalkennwortmaske 15 zu deren Stellenzahl für jede neu zu erzeugende Einmalkennwortmaske 15 individuell und variabel festlegen, z.B. zufallsbedingt oder abhängig von vorgegebenen oder gewünschten Sicherheitskriterien für das resultierende Einmalkennwort 18, einer Benutzerakzeptanz oder dergleichen.

Fig. 2 zeigt ein Beispiel einer Erzeugung einer Einmalkennwortmaske 15 zur Ableitung eines Einmalkennworts 18, mit dem sich der Benutzer 16 gegenüber der Transaktionseinrichtung 20 authentisieren kann. Die Festzeichen und die Variablenzeichen in der Einmalkennwortmaske 15 werden auf einem 7-Segment-Display 14 dargestellt, mit dem sämtliche Ziffern "0" bis "9" sowie die Buchstaben "A", "b", "C", "d", "E" und gegebenenfalls "F" dargestellt werden können. Bei dem gezeigten Beispiel muss der Benutzer 16 die drei Variablenzeichen "A", "d" und "C" durch die Ziffern "5", "9" und "2" der PIN 17 ersetzen.

Im Zusammenhang mit der Verwendung eines von dem Datenträger 10 vorgegebenen Einmalkennworts 18 als TAN zur Autorisierung einer Transaktion, gibt der Benutzer 16 die entsprechenden Transaktionsdaten 19 über die Tastatur 22 und die Anzeigeneinrichtung 24 des Nutzerendgeräts 21 ein, z.B. in eine mittels eines Webbrowsers angezeigte Transaktionswebsite des Transaktionsservers 26. In dem in Fig. 3 illustrierten Beispiel hat der Benutzer als Transaktionsdaten 19 eine Kontonummer ("account"), eine Bankleitzahl ("bank code") sowie einen zu überweisenden Betrag ("amount") spezifiziert. Diese Transaktionsdaten 19 werden über die Transaktionswebsite mit einer Zuordnung zu Buchstaben als Variablenzeichen versehen, die der Maskengenerator 12 in eine zu erzeugende Einmalkennwortmaske 15 einbringen kann. Diese Abbildung von Variablenzeichen auf einzelne Ziffern der Transaktionsdaten 19 kann nach einem hinreichend komplexen, aber deterministischen Verfahren, z.B. abhängig von der Systemzeit oder dergleichen, welches sowohl dem Maskengenerator 12 als auch dem Referenzkennwortgenerator 27 bekannt ist, von Fall zu Fall variiert werden.

In die auf dem Display 14 angezeigte sechsstellige Einmalkennwortmaske 15 sind bei dieser Ausführungsform nicht nur eindeutig bestimmte Ziffern der geheimen PIN 17 des Benutzers 16 einzubringen (vorliegend durch Ersetzen der Variablenzeichen "A" und "C" durch die erste und dritte Ziffer der PIN 17), sondern auch Ziffern der Transaktionsdaten 19, nämlich beispielsweise die auf der Transaktionswebsite dem Variablenzeichen "W" zugeordnete zweitletzte Ziffer ("7") der Bankleitzahl oder die dem Variablenzeichen "X" zugeordnete Ziffer ("8") des Überweisungsbetrags. Auf diese Weise ist das Einmalkennwort 18 sowohl benutzerabhängig als auch transaktionsabhängig, so dass die Transaktionseinrichtung 20 einerseits den Benutzer 16 über den Anteil der PIN 17 in dem Einmalkennwort 18 authentisieren und andererseits die Integrität der Transaktionsdaten 19 anhand deren Anteil in dem Einmalkennwort 18 verifizieren kann.

Ebenso wie Anteile der geheimen PIN 17 oder Anteile der Transaktionsdaten 19 können auch Anteile sonstiger Kennungen, Daten oder Informationen des Benutzers 16 über die Einmalkennwortmaske 15 in ein Einmalkennwort 18 eingebracht werden, beispielsweise ein Benutzername oder eine Ausweisnummer des Benutzers 16 oder dergleichen, sofern dies zuvor vereinbart wird und sowohl dem Maskengenerator 12 und dem Referenzkennwortgenerator 27 als auch dem Benutzer 16 bekannt ist. In einem entsprechenden System könnten beispielsweise nur Transaktionsdaten in das Einmalkennwort eingebracht werden.

Prinzipiell kann der Maskengenerator 12 bei der Erzeugung der Einmalkennwortmaske 15 so vorgehen, dass er zunächst ein vollständiges Einmalkennwort aus Festzeichen erzeugt und dann einige Festzeichen durch Variablenzeichen ersetzt, oder die Einmalkennwortmaske 15 zeichenweise aufbaut und für jede Stelle der Einmalkennwortmaske 15 individuell entscheidet, ob ein Festzeichen oder ein Variablenzeichen einzusetzen ist. Entsprechend kann auch der Referenzkennwortgenerator 27 ein Referenzeinmalkennwort 28 erzeugen, indem entweder zunächst eine Referenzkennwortmaske erzeugt wird, die anschließend automatisch zu einem Referenzeinmalkennwort 28 abgeleitet wird, oder das Referenzkennwort zeichenweise aufgebaut wird, indem ein Variablenzeichen direkt durch die richtige Ziffer der geheimen PIN 17 oder der Transaktionsdaten 19 ersetzt wird.

Ferner kann der Datenträger 10 mit einer Datenkommunikationsschnittstelle (nicht dargestellt) ausgestattet sein, über die dieser zum Beispiel an das Nutzerendgerät 21 angeschlossen werden kann. Über eine derartige Datenkommunikationsverbindung kann der Maskengenerator 12 beispielsweise die über das Nutzerendgerät 21 eingegebenen Transaktionsdaten 19 erhalten und zur Erzeugung einer Einmalkennwortmaske 15 nutzen, z.B. um Einmalkennwortmasken 15 zu erzeugen, die zu Einmalkennwörtern 18 mit möglichst statistisch gleichverteilten Ziffern abgeleitet werden. Ebenso kann der Maskengenerator 12 bei Kenntnis der Transaktionsdaten 19 die Anteile der Transaktionsdaten 19, die in dem abzuleitenden Einmalkennwort 18 vorhanden sein sollen, sofort in die Einmalkennwortmaske 15 einsetzen, so dass diese nicht erst durch Ersetzen entsprechender Variablenzeichen durch den Benutzer 16 eingebracht werden müssen. Dies ist ohne Sicherheitseinschränkungen möglich, da die Transaktionsdaten 19 ohnehin öffentlich sind und das Einbringen von Anteilen der Transaktionsdaten 19 in ein Einmalkennwort 18 lediglich der Verifikation der Integrität der Transaktionsdaten 19 dient, um auszuschließen, dass die Transaktionsdaten 19 zwischen der Eingabe in das Benutzerendgerät 21 durch den Benutzer 16 und dem Entgegennehmen durch den Transaktionsserver 26 manipuliert wurden, z.B. durch eine auf dem Nutzerendgerät 21 installierte Schadsoftware oder bei der Übertragung über das Datenkommunikationsnetzwerk 25.

Eine Datenkommunikationsverbindung zwischen dem Datenträger 10 und dem Nutzerendgerät 21 könnte auch zu einer Rückkopplung der von dem Benutzer 16 abgeleiteten und in das Nutzerendgerät 21 eingegebenen Einmalkennwörter 18 an den Datenträger 10 genutzt werden, damit der Maskengenerator 12 diese zur Optimierung der statistischen Eigenschaften der Einmalkennwörter 18 bei der Erzeugung zukünftiger Einmalkennwortmasken 15 berücksichtigen kann.

## Patentansprüche

1. Verfahren auf einem portablen Datenträger (10) zum Erzeugen einer Einmalkennwortmaske (15), anhand der ein Benutzer (16) des Datenträgers (10) ein mit einem auf einer Transaktionseinrichtung (20) vorliegenden Referenzeinmalkennwort (28) übereinstimmendes Einmalkennwort (18) ableiten kann, **dadurch gekennzeichnet, dass** in die Einmalkennwortmaske (15) Variablenzeichen eingefügt werden, die zum Ableiten des Einmalkennworts (18) jeweils mit einem Anteil eines dem Benutzer (16) zugeordneten Geheimnisses (17) in einer eindeutig vorgegebenen Weise zu ersetzen sind, wobei die Variablenzeichen derart in die Einmalkennwortmaske (15) eingebracht werden, dass das Geheimnis (17) lediglich teilweise in dem abgeleiteten Einmalkennwort (18) enthalten sind.

2. Verfahren nach Anspruch 1, **dadurch gekennzeichnet, dass** die Einmalkennwortmaske (15) derart erzeugt wird, dass die Variablenzeichen durch Anteile einer dem Benutzer (16) von der Transaktionseinrichtung (20) zugeordneten geheimen Identifikationskennung (PIN) zu ersetzen sind, die der Authentisierung und/oder Autorisierung gegenüber der Transaktionseinrichtung (20) dient.

3. Verfahren nach Anspruch 1 oder 2, **dadurch gekennzeichnet, dass** in die Einmalkennwortmaske (15) Variablenzeichen derart eingebracht werden, dass ein Variablenzeichen jeweils ein Zeichen des Geheimnisses (17) eindeutig bestimmt, durch welches das Variablenzeichen beim Ableiten des Einmalkennworts (18) zu ersetzen ist.

4. Verfahren nach einem der Ansprüche 1 bis 3, **dadurch gekennzeichnet, dass** in die Einmalkennwortmaske (15) zumindest ein Festzeichen eingebracht wird, das beim Ableiten des Einmalkennworts (18) unverändert zu übernehmen ist.

5. Verfahren nach Anspruch 4, **dadurch gekennzeichnet, dass** in die Einmalkennwortmaske (15) Variablenzeichen eingefügt werden, die aus einen vorgegebenen Variablenzeichenalphabet ausgewählt werden, und Festzeichen eingebracht werden, die aus einem von dem Variablenzeichenalphabet verschiedenen Festzeichenalphabet ausgewählt werden.

6. Verfahren nach einem der Ansprüche 1 bis 5, **dadurch gekennzeichnet, dass** für jede zu erzeugende Einmalkennwortmaske (15) eine individuelle Anzahl von einzufügenden Variablenzeichen bestimmt wird und/oder für jedes in die Einmalkennwortmaske (15) einzubringende Variablenzeichen eine individuelle Stelle innerhalb der Einmalkennwortmaske (15) bestimmt wird, an der das Variablenzeichen in die Einmalkennwortmaske (15) eingebracht wird.

7. Verfahren nach einem der Ansprüche 1 bis 6, **dadurch gekennzeichnet, dass,** sofern eine Einmalkennwortmaske (15) für ein Einmalkennwort (18) zu erzeugen ist, das der Autorisierung von Transaktionsdaten (19) gegenüber der Transaktionseinrichtung (20) dient, in die Einmalkennwortmaske (15) zumindest ein Variablenzeichen eingebracht wird, das jeweils einen Anteil der Transaktionsdaten (19) eindeutig bestimmt, durch welchen das zumindest eine Variablenzeichen beim Ableiten des Einmalkennworts (18) zu ersetzen ist.

8. Verfahren nach einem der Ansprüche 1 bis 7, **dadurch gekennzeichnet, dass** das Referenzeinmalkennwort (28) dem Benutzer als System-Einmalkennwort angezeigt wird, wobei der Benutzer das Einmalkennwort ableitet und mit dem angezeigten System-Einmalkennwort vergleicht.

9. Verfahren zum Authentisieren eines Benutzers (16) gegenüber einer Transaktionseinrichtung (20) mittels eines Einmalkennworts (18), **dadurch gekennzeichnet, dass**
ein portabler Datenträger (10) eine Einmalkennwortmaske (15) mit einem Verfahren nach einem der Ansprüche 1 bis 7 erzeugt und anzeigt;
der Benutzer das Einmalkennwort (18) ableitet, indem die Variablenzeichen der Einmalkennwortmaske (15) in der jeweils eindeutig vorgegebenen Weise durch einen Anteil des Geheimnisses (17) ersetzt werden, und das abgeleitete Einmalkennwort (18) in die Transaktionseinrichtung (20) eingibt; und
die Transaktionseinrichtung (20) das eingegebene Einmalkennwort (18) mit einem von der Transaktionseinrichtung (20) erzeugten Referenzeinmalkennwort (28) vergleicht und den Benutzer (16) bei Übereinstimmung des Einmalkennworts (18) und des Referenzeinmalkennworts (28) als authentisiert anerkennt.

10. Verfahren nach Anspruch 9, **dadurch gekennzeichnet, dass** die Transaktionseinrichtung (20) das Referenzeinmalkennwort (28) erzeugt, indem eine Referenzeinmalkennwortmaske in einer zu der Erzeugung der Einmalkennwortmaske (15) durch den Datenträger (10) analogen Weise erzeugt wird und die Variablenzeichen der erzeugten Referenzeinmalkennwortmaske automatisch in der eindeutig vorgegebenen Weise ersetzt werden.

11. Verfahren nach einem der Ansprüche 9 bis 10, **dadurch gekennzeichnet, dass** die Variablenzeichen jeweils durch dasjenige Zeichen des Geheimnisses (17) ersetzt werden, welches durch das Variablenzeichen eindeutig bestimmt ist.

12. Portabler Datenträger (10) zum Erzeugen einer Einmalkennwortmaske (18), aus der ein Benutzer (16) des Datenträgers (10) ein mit einem auf einer Transaktionseinrichtung (20) vorliegenden Referenzeinmalkennwort (28) übereinstimmendes Einmalkennwort (18) ableiten kann, umfassend einen Prozessor (11) und einen Maskengenerator (12) sowie eine Anzeigeeinrichtung (14), **dadurch gekennzeichnet, dass** der Maskengenerator (12) eingerichtet ist, in die Einmalkennwortmaske (15) Variablenzeichen einzufügen, die zum Ableiten des Einmalkennworts (18) jeweils mit einem Anteil eines dem Benutzer (16) zugeordneten Geheimnisses (17) in einer eindeutig vorgegebenen Weise zu ersetzen sind, wobei die Variablenzeichen derart in die Einmalkennwortmaske (15) eingebracht werden, dass das Geheimnis (17) lediglich teilweise in dem abgeleiteten Einmalkennwort (18) enthalten ist.

13. Datenträger (10) nach Anspruch 12, **dadurch gekennzeichnet, dass** der Maskengenerator (12) eingerichtet ist, ein Verfahren nach einem der Ansprüche 1 bis 7 durchzuführen.

14. Transaktionssystem, umfassend einen Datenträger (10) nach Anspruch 12 oder 13 sowie eine Transaktionseinrichtung (20) mit einem Referenzkennwortgenerator (27) zur Erzeugung eines Referenzeinmalkennworts (28), die derart eingerichtet ist, dass das Transaktionssystem auf Veranlassung des Benutzers (16) des Datenträgers (10) ein Verfahren nach einem der Ansprüche 9 bis 11 durchführen kann.

## Geänderte Patentansprüche

### Geänderte Patentansprüche gemäss Regel 137(2) EPÜ.

**1.** Verfahren auf einem portablen Datenträger (10) zum Erzeugen einer Einmalkennwortmaske (15), anhand der ein Benutzer (16) des Datenträgers (10) ein mit einem auf einer Transaktionseinrichtung (20) vorliegenden Referenzeinmalkennwort (28) übereinstimmendes Einmalkennwort (18) ableiten kann, wobei in die Einmalkennwortmaske (15) Variablenzeichen eingefügt werden, die zum Ableiten des Einmalkennworts (18) jeweils mit einem Anteil eines dem Benutzer (16) zugeordneten Geheimnisses (17) in einer eindeutig vorgegebenen Weise zu ersetzen sind, wobei die Variablenzeichen derart in die Einmalkennwortmaske (15) eingebracht werden, dass das Geheimnis (17) lediglich teilweise in dem abgeleiteten Einmalkennwort (18) enthalten sind.

**2.** Verfahren nach Anspruch 1, **dadurch gekennzeichnet, dass** die Einmalkennwortmaske (15) derart erzeugt wird, dass die Variablenzeichen durch Anteile einer dem Benutzer (16) von der Transaktionseinrichtung (20) zugeordneten geheimen Identifikationskennung (PIN) zu ersetzen sind, die der Authentisierung und/ oder Autorisierung gegenüber der Transaktionseinrichtung (20) dient.

**3.** Verfahren nach Anspruch 1 oder 2, **dadurch gekennzeichnet, dass** in die Einmalkennwortmaske (15) Variablenzeichen derart eingebracht werden, dass ein Variablenzeichen jeweils ein Zeichen des Geheimnisses (17) eindeutig bestimmt, durch welches das Variablenzeichen beim Ableiten des Einmalkennworts (18) zu ersetzen ist.

**4.** Verfahren nach einem der Ansprüche 1 bis 3, **dadurch gekennzeichnet, dass** in die Einmalkennwortmaske (15) zumindest ein Festzeichen eingebracht wird, das beim Ableiten des Einmalkennworts (18) unverändert zu übernehmen ist.

**5.** Verfahren nach Anspruch 4, **dadurch gekennzeichnet, dass** in die Einmalkennwortmaske (15) Variablenzeichen eingefügt werden, die aus einen vorgegebenen Variablenzeichenalphabet ausgewählt werden, und Festzeichen eingebracht werden, die aus einem von dem Variablenzeichenalphabet verschiedenen Festzeichenalphabet ausgewählt werden.

**6.** Verfahren nach einem der Ansprüche 1 bis 5, **dadurch gekennzeichnet, dass** für jede zu erzeugende Einmalkennwortmaske (15) eine individuelle Anzahl von einzufügenden Variablenzeichen bestimmt wird und/ oder für jedes in die Einmalkennwortmaske (15) einzubringende Variablenzeichen eine individuelle Stelle innerhalb der Einmalkennwortmaske (15) bestimmt wird, an der das Variablenzeichen in die Einmalkennwortmaske (15) eingebracht wird.

**7.** Verfahren nach einem der Ansprüche 1 bis 6, **dadurch gekennzeichnet, dass**, sofern eine Einmalkennwortmaske (15) für ein Einmalkennwort (18) zu erzeugen ist, das der Autorisierung von Transaktionsdaten (19) gegenüber der Transaktionseinrichtung (20) dient, in die Einmalkennwortmaske (15) zumindest ein Variablenzeichen eingebracht wird, das jeweils einen Anteil der Transaktionsdaten (19) eindeutig bestimmt, durch welchen das zumindest eine Variablenzeichen beim Ableiten des Einmalkennworts (18) zu ersetzen ist.

**8.** Verfahren nach einem der Ansprüche 1 bis 7, **dadurch gekennzeichnet, dass** das Referenzeinmalkennwort (28) dem Benutzer als System-Einmalkennwort angezeigt wird, wobei der Benutzer das Einmalkennwort ableitet und mit dem angezeigten System-Einmalkennwort vergleicht.

**9.** Verfahren zum Authentisieren eines Benutzers (16) gegenüber einer Transaktionseinrichtung (20) mittels eines Einmalkennworts (18), **dadurch gekennzeichnet, dass**
ein portabler Datenträger (10) eine Einmalkennwortmaske (15) mit einem Verfahren nach einem der Ansprüche 1 bis 7 erzeugt und anzeigt;
der Benutzer das Einmalkennwort (18) ableitet, indem die Variablenzeichen der Einmalkennwortmaske (15) in der jeweils eindeutig vorgegebenen Weise durch einen Anteil des Geheimnisses (17) ersetzt werden, und das abgeleitete Einmalkennwort (18) in die Transaktionseinrichtung (20) eingibt; und
die Transaktionseinrichtung (20) das eingegebene Einmalkennwort (18) mit einem von der Transaktionseinrichtung (20) erzeugten Referenzeinmalkennwort (28) vergleicht und den Benutzer (16) bei Übereinstimmung des Einmalkennworts (18) und des Referenzeinmalkennworts (28) als authentisiert anerkennt.

**10.** Verfahren nach Anspruch 9, **dadurch gekennzeichnet, dass** die Transaktionseinrichtung (20) das Referenzeinmalkennwort (28) erzeugt, indem eine Referenzeinmalkennwortmaske in einer zu der Erzeugung der Einmalkennwortmaske (15) durch den Datenträger (10) analogen Weise erzeugt wird und die Variablenzeichen der erzeugten Referenzeinmalkennwortmaske automatisch in der eindeutig vorgegebenen Weise ersetzt werden.

**11.** Verfahren nach einem der Ansprüche 9 bis 10, **dadurch gekennzeichnet, dass** die Variablenzeichen jeweils durch dasjenige Zeichen des Geheimnisses (17) ersetzt werden, welches durch das Variablenzeichen eindeutig bestimmt ist.

**12.** Portabler Datenträger (10) zum Erzeugen einer Einmalkennwortmaske (18), aus der ein Benutzer (16) des Datenträgers (10) ein mit einem auf einer Transaktionseinrichtung (20) vorliegenden Referenzeinmalkennwort (28) übereinstimmendes Einmalkennwort (18) ableiten kann, umfassend einen Prozessor (11) und einen Maskengenerator (12) sowie eine Anzeigeeinrichtung (14), wobei der Maskengenerator (12) eingerichtet ist, in die Einmalkennwortmaske (15) Variablenzeichen einzufügen, die zum Ableiten des Einmalkennworts (18) jeweils mit einem Anteil eines dem Benutzer (16) zugeordneten Geheimnisses (17) in einer eindeutig vorgegebenen Weise zu ersetzen sind, wobei die Variablenzeichen derart in die Einmalkennwortmaske (15) eingebracht werden, dass das Geheimnis (17) lediglich teilweise in dem abgeleiteten Einmalkennwort (18) enthalten ist.

**13.** Datenträger (10) nach Anspruch 12, **dadurch gekennzeichnet, dass** der Maskengenerator (12) eingerichtet ist, ein Verfahren nach einem der Ansprüche 1 bis 7 durchzuführen.

**14.** Transaktionssystem, umfassend einen Datenträger (10) nach Anspruch 12 oder 13 sowie eine Transaktionseinrichtung (20) mit einem Referenzkennwortgenerator (27) zur Erzeugung eines Referenzeinmalkennworts (28), die derart eingerichtet ist, dass das Transaktionssystem auf Veranlassung des Benutzers (16) des Datenträgers (10) ein Verfahren nach einem der Ansprüche 9 bis 11 durchführen kann.
